# EUROPÄISCHE PATENTSCHRIFT

(11) **EP 0 749 453 B1**
(45) Veröffentlichungstag und Bekanntmachung des Hinweises auf die Patenterteilung: **13.05.1998**
(21) Anmeldenummer: 95912210.2
(22) Anmeldetag: 06.03.1995
(51) Int. Cl.: C08G 69/34, C09J 177/08

(54) **POLYAMID AUF DER BASIS VON DIMERFETTSÄURE**
DIMER FATTY ACID-BASED POLYAMIDE
POLYAMIDE A BASE D'ACIDE GRAS DIMERE

(30) Priorität: 11.03.1994 DE 4408276; 25.04.1994 DE 4414337
(43) Veröffentlichungstag der Anmeldung: 27.12.1996
(73) Patentinhaber: Henkel Kommanditgesellschaft auf Aktien, 40191 Düsseldorf (DE)
(72) Erfinder: HEUCHER, Reimar, D-50259 Pulheim (DE); BECKER, Bettina, D-40789 Monheim (DE); ROSSINI, Angela, I-20162 Milano (IT)
(86) Internationale Anmeldenummer: EP9500817
(87) Internationale Veröffentlichungsnummer: WO9524439

(56) Entgegenhaltungen:
- EP-A- 0 040 926
- EP-A- 0 217 145
- EP-A- 0 334 667
- DE-A- 1 912 796
- DE-A- 3 535 732
- FR-A- 2 253 812
- PATENT ABSTRACTS OF JAPAN vol. 006, no. 143 (C-117) 3. August 1982 & JP,A,57 067 660 (MUSASHINO KAGAKU KENKYUSHO:KK) 24. April 1982

## Beschreibung

Die Erfindung betrifft ein Polyamid auf der Basis von Dimerfettsäure und seine Verwendung als Schmelzklebstoff für PVC.

Derartige Polyamide sind bekannt. So wird in der DE 23 61 486 ein Polyamid beschrieben, das aus 0,5 bis 0,8 Äquivalenten einer polymeren Fettsäure mit einem Gehalt an dimerer Fettsäure von 70 bis 100 Gew.-%, 0,2 bis 0,5 Äquivalenten einer Co-Dicarbonsäure der allgemeinen Formel HOOC-R-COOH, wobei R einen Alkylenrest von 4 bis 10 Kohlenstoffatomen darstellt, 0 bis 0,6 Äquivalenten Ethylendiamin und 0,4 bis 1,0 Äquivalenten Piperazin hergestellt wurde, wobei das Äquivalenzverhältnis von Carbonsäure und Diaminen etwa gleich groß ist. Diese Polyamide werden als Basis für Schmelzklebstoffe eingesetzt, um die Kanten aus z.B. Polyvinylchlorid wärmestandfest mit Holzplatten zu verleimen. Als Antioxidant wird ein dialkyliertes Phenylamin eingesetzt.

In der DE 42 11 125 wird ein Schmelzklebstoff beschrieben, der mindestens 50 Gew.-% Polyamid auf der Basis von dimerisierter Fettsäure, 5 bis 20 Gew.-% mindestens eines Ethylencopolymeren aus der Gruppe: Ethylen-Vinylacetat, Ethylen-Acrylat oder Ethylen-Methacrylat, wobei die Alkoholkomponente 1 bis 18 C-Atome enthält, 2 bis 10 Gew.-% eines Copolymeren aus Styrol, Ethylen und Butylen, 5 bis 25 Gew.-% Hydroabiethylalkohol oder Polybuten, 0 bis 10 Gew.-% mindestens eines Harzes aus der Gruppe: Polycyclopentadien, Polyterpen, flüssiges Kohlenwasserstoff-Harz und 0 bis 15 Gew.-% eines Copolymeren aus Ethylen oder Propylen und/oder Maleinsäure enthält. Derartige Schmelzklebstoffe werden zum Verkleben von unvorbehandeltem Polyethylen und Polyvinylchlorid oder Metallen, insbesondere Kupfer, Blei und Aluminium miteinander oder mit sich selbst verwendet.

In der EP 40 926 wird ein Polyamid-Schmelzklebstoff beschrieben, der auf mindestens einer Dimerfettsäure und mindestens einem Diamin basiert. Das Amin soll im Überschuß eingesetzt werden. Als Stabilisator wird Irganox 1010 beschrieben, ein sterisch gehindertes Phenol.

Derartige Polyamide haben sich zum Kleben, Dichten und Füllen, von Formteilen aus insbesondere PVC, Polyamid und Polyethylen in der Elektroindustrie bewährt. Unter extremen Temperaturbedingungen kann es jedoch Probleme geben. So wird bei Temperaturen oberhalb von 100 °C über sehr lange Zeiträume das PVC schwarz und spröde. Die Litzen von Kabeln lassen sich mit relativ geringer Kraft entfernen. Das Kupfer wird korrodiert. Diese Probleme treten weder beim PA noch beim PVC alleine auf, sondern nur wenn beide Werkstoffe zusammentreffen.

Die erfindungsgemäße Aufgabe besteht darin, das PVC zu stabilisieren, so daß es bei Kontakt mit Polyamiden auf der Basis von Dimerfettsäuren auch extremen Temperaturbelastungen besser gewachsen ist.

Die erfinderische Lösung ist den Ansprüchen zu entnehmen. Sie besteht im wesentlichen in dem Zusatz mindestens eines PVC-Wärmestabilisators zu dem Polyamid auf der Basis mindestens einer Dimerfettsäure.

Ein Stoff ist dann als PVC-Wärmestabilisator anzusehen, wenn er in PVC die Abspaltung von HCl bei Temperaturen von 180 bis 200 °C zeitlich oder mengenmäßig verringert, verglichen mit PVC ohne diesen Stoff. Eine Meßmethode für diese Dehydrochlorierung wird in der DIN 53381 beschrieben. Ein PVC-Material ist dann stabilisiert, wenn die Stabilitätszeit herabgesetzt wird, wobei als Stabilitätszeit die Zeit zu verstehen ist, in der sich eine bestimmte Menge HCl gebildet hat. Ein PVC-Material ist auch dann als stabilisiert anzusehen, wenn die Induktionszeit (Beginn der HCl-Abspaltung) über 0 liegt, da nicht stabilisiertes PVC-Material sofort HCl abspaltet.

Handelsübliche PVC-Stabilisatoren können zu verschiedenen Substanzgruppen zusammengefaßt werden. Erwähnt seien hier: Bleiverbindungen, Ba-, Cd-, Ca-, und Zn-Salze von organischen Säuren, Organozinnverbindungen, organische Basen, organische Phosphite, Epoxidverbindungen und Perchlorate.

Unter zinnorganischen Verbindungen werden Verbindungen mit mindestens einer Sn-C-Bindung der allgemeinen Formel R¹ₙSnX₄₋ₙ verstanden. Dabei kann n eine Zahl von 1-4 sein, insbesondere 2. R¹ kann eine Aryl-oder Alkylgruppe mit 1-18, insbesondere 2-8 C-Atomen sein. X kann eine Alkoholat-Gruppe -OR² oder eine Carboxylat-Gruppe -COOR² sein, wobei R² eine Alkylgruppe mit 2-18, insbesondere 4-16 C-Atomen ist. Besondere Bedeutung als PVC-Stabilisatoren besitzen auch Organozinnmercaptide. Konkrete Verbindungen sind Dibutylzinn-maleat, Dibutyl-zinn-dilaurat, Dioctyl-zinn-maleat, Dibutylzinn-mercaptid.

Perchloratverbindungen sind Sauerstoffverbindungen des Chlors mit der Formel ClO₄^{θ}, wobei das Chloratom die Oxidationsstufe 7 besitzt. Insbesondere von Bedeutung sind die Salze der Perchlorsäure wie z. B. Natriumperchlorat (NaClO₄) oder Kaliumperchlorat (KClO₄). Das wichtigste Perchlorat, aus dem alle anderen Perchlorate hergestellt werden können, ist Natriumperchlorat. Es wird durch elektrochemische Oxidation von Natriumchlorat erzeugt. Zur PVC-Stabilisierung kommen diese Verbindungen zum Einsatz, indem man vorzugsweise Perchlorate wie Natriumperchlorat in Glykolether wie z. B. Methyldiglykol benutzt.

Epoxidverbindungen besitzen mindestens einen Dreiring, der von zwei Kohlenstoffatomen und einem Sauerstoffatom gebildet wird. Epoxide sind wegen ihrer starken Ringspannung sehr reaktionsfähige Systeme. Besonders unter der katalytischen Einwirkung von Säuren reagieren sie leicht unter Öffnung des Ringes. Im Gegensatz zu offenkettigen Ethern reagieren Epoxide auch mit basischen Verbindungen und Grignard-Reagenzien. Als Beispiele können folgende Verbindungen genannt wurden: epoxidiertes Sojabohnenöl, 3,4-Epoxycyclohexylmethyl-3,4-epoxy-cyclohexancarboxylat.

Bei den organischen Phosphiten handelt es sich um Phosphorverbindungen der allgemeinen Formel PO₃R³. Das P-Atom ist über drei Sauerstoffatome mit drei gleichen oder unterschiedlichen Alkyl-bzw. Aryl-Gruppen verbunden. Beispiel: Diphenyldecylphosphit. Die Alkyl-Gruppe hat 1-16 C-Atome, insbesondere 8-12. Bei der Aryl-Gruppe handelt es sich insbesondere um die Phenyl-Gruppe.

Die erwähnten Metallstabilisatoren (Ba, Cd, Ca, Zn) basieren auf carbonsauren Salzen - häufig auch mit Phenolatanteilen. Sie lassen sich am Beispiel von Barium durch die allgemeine Formel Ba (-O-CO-R⁴)₂ beschreiben, wobei R⁴ ein linearer oder verzweigter Alkylrest mit 8 bis 36, insbesondere 12 bis 24 C-Atomen oder ein Alkylarylrest ist, wobei deren Alkylrest vorzugsweise 1 bis 12 C-Atome hat. In Kombination wirken derartige Systeme häufig synergistisch.

Als Beispiel für eine organische Base kann β-Aminocrotonsäureester genannt werden.

Weitere konkrete PVC-Stabilisatoren sind den Fachbüchern zu entnehmen, insbesondere "Ullmanns Eucyklopädie der technischen Chemie", Band 15, Seite 261, 262 und 263 der 4. Auflage (Stichwort: Kunststoffe). Es handelt sich dabei nicht um PA-Stabilisatoren.

Die beschriebenen Verbindungen können entsprechend der Stärke des gewünschten Effektes in unterschiedlichen Konzentrationen zugesetzt werden. Um eine Gebrauchstüchtigkeit des PVCs bei 125°C über 240 Stunden hin zu erhalten, sollte der Gehalt bei 0,2 bis 10,0 Gew-% liegen, insbesondere bei 0,5 bis 5,0 Gew-%, bezogen auf das Polyamid. Der Gehalt hängt auch von dem Polyamid selbst ab, von seiner Herstellung und seiner Zusammensetzung. Voraussetzung ist, daß die PVC-stabilisierende Substanz sich in das Polyamid gleichmäßig einarbeiten läßt, auch bei höheren Temperaturen nicht wieder austritt und ihre Funktionsweise, z. B. als Säurefänger, behält. Vergleichsweise große Moleküle wirken besonders effektiv, da sie zusätzlich eine abschirmende Wirkung ausüben, d. h. sie schützen PVC und PA voneinander. Vorzugsweise wird die Transparenz des Polyamids nur wenig verändert.

Der erfindungsgemäße Schmelzklebstoff enthält als wesentliche Komponente ein Polyamid auf der Basis von dimerisierter Fettsäure. "Dimerisierte Fettsäuren" werden durch Kupplung von ungesättigten langkettigen einbasischen Fettsäuren, z.B. Linolensäure, Ölsäure, erhalten. Sie ist ein Gemisch vieler Isomerer (siehe R.F. Paschke, L.E. Peterson und D.H. Wheeler, Journal of the American Oil Chemists' Society, 41, 723 (1964). Selbstverständlich können auch Trimere und weitere Oligomere in geringem Maße enthalten sein. Die Säuren sind seit langem bekannt und im Handel erhältlich.

Die erfindungsgemäßen Polyamide sind vorzugsweise folgendermaßen zusammengesetzt:
- 35 bis 49,5 Mol-% dimerisierte Fettsäure sowie
- 0,5 bis 15 Mol-% monomere Fettsäure mit 12 bis 22 C-Atomen und
- 2 bis 35 Mol-% Polyetherdiamine der allgemeinen Formel

   H₂N - R₅ - O - (R₆O)ₓ - R₇ - NH₂, (I)

   in der
   - x: eine Zahl zwischen 8 und 80, vornehmlich zwischen 8 und 40,
   - R₅ und R₇: gleiche oder verschiedene aliphatische und/oder cycloaliphatische Kohlenwasserstoffreste mit vorzugsweise 2 bis 8 C-Atomen
   - R₆: einen gegebenenfalls verzweigten aliphatischen Kohlenwasserstoffrest mit 1 bis 6 Kohlenstoffatomen darstellt,
   sowie
- 15 bis 48 Mol-% aliphatische Diamine mit 2 bis 40 Kohlenstoffatomen,
wobei die dimerisierten Fettsäuren bis zu 2/3 durch aliphatische Dicarbonsäuren mit 4 bis 12 Kohlenstoffatomen ersetzt werden können.

Es ist aber auch günstig, ein Polyamid einzusetzen, welches erhalten wurde aus:
- 20 bis 49,5 Mol-% dimerisierter Fettsäure sowie
- 0,5 bis 15 Mol-% monomere Fettsäure mit 12 bis 22 C-Atomen und
- 20 bis 55 Mol-% eines wenigstens 2 primäre Aminogruppen tragenden Amins mit 2 bis 40 C-Atomen,
wobei die dimerisierten Fettsäuren bis zu 2/3 durch aliphatische Dicarbonsäuren mit 4 bis 12 Kohlenstoffatomen ersetzt sein können.

Die erfindungsgemäß eingesetzten Polyamide können darüber hinaus noch weitere in Schmelzklebern gängige Rohstoffe enthalten. So sind insbesondere aliphatische Dicarbonsäuren gebräuchlich. Geeignete aliphatische Carbonsäuren weisen vorzugsweise 4 bis 12 C-Atome auf. So sind beispielsweise Glutarsäure, Maleinsäure, Bernsteinsäure, Adipinsäure, Pimelinsäure, Korksäure oder auch Sebacinsäure geeignet. Durch diese Säuren kann Dimerfettsäure molmäßig bis zu 2/3 ersetzt werden. Dabei ist es dem Fachmann bekannt, daß durch Zusatz von Sebacinsäure der Schmelzpunkt der Polyamide in gewissen Grenzen erhöht werden kann. Weitere im Schmelzkleber mögliche Rohstoffe sind langkettige Aminocarbonsäuren wie 11-Aminoundecansäure oder auch Lauryllactam. In kleinen Mengen können auch die in der Faserchemie bekannten Polyamid-Rohstoffe wie beispielsweise Caprolactam eingesetzt werden. Diese Stoffe erlauben es dem Fachmann, den Schmelzpunkt in gewissen Grenzen zu erhöhen.

Bezüglich der Aminkomponenten in den Polyamiden ist auszuführen, daß hier Polyetherpolyole mit primären Aminoendgruppen bevorzugt sind. Geeignete Polyetherpolyole mit Aminoendgruppen basieren auf Polyethylenglykol, Polypropylenglykol oder Polytetrahydrofuran. Dabei sind Polyetherpolyole mit Aminoendgruppen bevorzugt, die nicht oder nur geringfügig wasserlöslich sind. Die eingesetzten Polyetherpolyole mit Aminoendgruppen weisen Molekulargewichte zwischen 700 und 3 500 oder auch zwischen 1 200 und 2 500 auf. Eine besonders geeignete Rohstoffklasse sind beispielsweise die Bis-(3-aminopropyl)-polytetrahydrofurane eines Molekulargewichts zwischen 700 und 3 500 oder die Bis-(2-aminopropyl)-polyoxypropylene eines Molekulargewichts zwischen 1 200 und 2 500. Weiterhin können auch primäre lineare Alkylendiamine mit 2 bis 10 C-Atomen eingesetzt werden etwa Hexamethylendiamin, 1,3-Diaminopropan, 1,4-Diaminobutan. Geeignet ist auch Piperazin und Dipiperidylpropan. Eine weitere geeignete Klasse von Diaminen leitet sich von den Dimerfettsäuren ab und enthält statt der Carboxylgruppen primäre Aminogruppen. Derartige Substanzen werden häufig Dimerdiamine genannt. Sie werden durch Nitrilbildung aus den dimerisierten Fettsäuren und anschließende Hydrierung erhalten.

Bezüglich des molekularen Aufbaus der den erfindungsgemäßen verträglichen Mischungen zugrunde liegenden Polyamide ist das Folgende auszuführen: Dem auf diesem Gebiete tätigen Fachmann ist es bekannt, daß monofunktionelle, difunktionelle und trifunktionelle Rohstoffe in einem bestimmten Verhältnis eingesetzt werden, um schmelzbare, d.h. nicht vernetzte Produkte zu erhalten. Es gilt hier das allgemeine Fachwissen der Polymerchemie. Danach kann beim Auftreten von Vernetzungen / Vergelungen durch Absenken des Anteils an trifunktionellen Komponenten (Trimerfettsäuren) und/oder Erhöhen des Gehalts an monofunktionellen Aminen oder Fettsäuren zu Rezepturen gelangt werden, die nicht zur Vergelung neigen. Das Molekulargewicht der erfindungsgemäßen Schmelzkleber läßt sich am besten durch Endgruppen-Titration der Amino- oder Säureendgruppen über das Molekulargewicht der Einzelkomponenten errechnen.

Die erfindungsgemäßen Schmelzkleber haben vorzugsweise eine Aminzahl von weniger als 2,0, insbesondere weniger als 0,8.

Die Aminzahl gibt an wieviel mg KOH einem g der Substanz äquivalent sind. Sie wurde nach der DIN 16945, Blatt 1, unter folgenden Bedingungen bestimmt: Ca. 10 g des zu untersuchenden Polyamid-Schmelzklebstoffes werden in einem Erlenmeyer-Kolben genau gewogen und in der Kälte mit 100 ml eines Gemisches aus Methylisobutylketon/Butanol (gleiche Volumenanteile) versetzt. Die Probe wird unter Wärmen gelöst. Nach dem Abkühlen werden 50 ml Ethanol und 3 ml Brom-Cresol-grün hinzugefügt. Titriert wird mit einer 0,5 N Salzsäure.

Die niedrige Aminzahl kann auf mehrfache Art und Weise erreicht werden, z.B. durch Überschuß der Säurekomponente bei der Kondensation oder durch Reaktion der Aminoendgruppen mit reaktiven Verbindungen, z.B. mit cycloaliphatischen Epoxiden. Als konkrete derartige Verbindungen sei genannt: 3,4-Epoxycyclohexylmethyl-3,4-epoxy-cyclohexancarboxylat. Damit läßt sich unter Umständen auch allein eine befriedigende Stabilität erreichen. Es ist natürlich auch möglich, die Endgruppen zu verringern, wobei man dann ein höheres Molekulargewicht erhält.

Außerdem sollte das Polyamid nicht mit einem Amin stabilisiert sein, sondern mit einem sterisch gehinderten Phenol, und zwar in einer Menge von 0,5 bis 3,0, insbesondere 1,0 bis 2,0 Gew.-%. Als konkrete Verbindungen seien beispielsweise genannt 2,6-Di-tert.-butyl-4-methylphenol und Phenol-4,4',4"-[(2,4,6-trimethyl-1,3,5-benzenetryl)-tris-(methylene)]-tris-(2,6-bis-(1,1-dimethylethyl).

Darüber hinaus können noch weitere Zusätze dem Polyamid hinzugefügt werden, z.B. Ruß, Harze, Wachse, Pigmente, Weichmacher.

Das erfindungsgemäße Polyamid kann aus den obengenannten Komponenten auf bekannte Art und Weise hergestellt werden, z.B. gemäß dem zitierten Stand der Technik.

Der Zusatz des PVC-Wärmestabilisators in das PA hat den Vorteil, daß die guten Eigenschaften des Polyamids auf der Basis von Dimerfettsäure erhalten bleiben und zusätzlich auch noch das PVC gegen Alterung geschützt wird, wenn es mit dem Polyamid in Kontakt kommt. Weitere Vorteile sind die verbesserte Haftung des Polyamids auf dem PVC nach Temperaturlagerung, die den gewünschten Dichtigkeitseffekt noch verstärkt. Außerdem findet nach Temperaturlagerung beim Messen der Winkelschälfestigkeit von Polyamid auf PVC ein Übergang von Adhäsions- zu Kohäsionsbruch statt.

Bei Einsatz verschiedener Epoxidverbindungen findet darüberhinaus eine zusätzliche Stabilisierung des Polyamids statt, unabhängig von der PVC-Problematik. Im Gegensatz zu normalen Polyamidschmelzklebstoffen findet nach 8-stündiger Lagerung bei 210°C kein Viskositätsabbau und nur ein geringes Nachdunkeln statt.

Aufgrund dieser Vorteile eignet sich das erfindungsgemäße Polyamid zum Dichten, Kleben und Füllen von PVC-Formteilen, insbesondere in der Elektroindustrie. Konkrete Beispiele sind: das Vergießen von Steckern, die mit PVC-Kabelmaterial bestückt sind und bis zu einer Temperatur von über 100 °C eingesetzt werden sowie das Abdichten von Kabelbündeln und Kabeldurchführungen aus PVC, die ebenfalls bei höheren Temperaturen eingesetzt werden.

Die Erfindung wird anhand von folgenden Beispielen im einzelnen beschrieben:

### I Materialien

**1. PVC**
   Es wurde ein PVC-Kabel der Temperaturklasse 2 eingesetzt.
**2. Muster 1**
   Ein Polyamid auf der Basis von Dimerfettsäure wurde, wie oben beschrieben, hergestellt. Es enthielt den Aminstabilisator Vulkanox DDA (4-(1-phenylethyl)-N-(4-(1-phenylethyl)phenyl), von dem 2 Gew.-% bei der PA-Herstellung zugesetzt wurden. Seine Aminzahl betrug 0,6, seine Säurezahl 7,3.
**3. Muster 2**
   Das Polyamid ist vergleichbar mit Muster 1, wurde aber mit 2 Gew.-% der Phenolverbindung Alvinox 100 (1,3,5-trimethyl-2,4,6-tris(3,5-di-tert.butyl-4-hydroxy-benzyl)benzol) stabilisiert.
**4. Muster 3**
   Das Polyamid ist mit Muster 2 vergleichbar; enthielt aber gleichzeitig 5,0 Gew-% der Epoxidverbindung ERL 4221 (3,4-Epoxycyclohexylmethyl-3,4-epoxy-cyclohexylcarboxylat).
**5. Muster 4**
   Das Polyamid basiert ebenfalls auf Muster 2, wurde aber zusätzlich mit 1,0 Gew-% Butylzinnmaleat versetzt.
**6. Muster 5**
   Das Polyamid ist mit Muster 2 vergleichbar und enthält darüber hinaus 1,0 Gew-% Natriumperchlorat in Diethylenglykolmonomethylether (35 %-ig).

Die Abmischungen wurden hergestellt, indem das Polyamid über den Erweichungspunkt hinaus erhitzt und der Stabilisator unter Rühren zugegeben wurde.

### II Versuchsdurchführung

Die obigen Materialien wurden bei 230 °C verklebt. Dabei wurde der Polyamidschmelzklebstoff bei 230 °C aufgeschmolzen. Die PVC-Kabel wurden in eine Teflonform eingelegt, die auf den Umfang des Kabels zugeschnitten war, d.h. die Kabel lagen mit dem halben Umfang in der Form. Das Polyamid wurde dann auf die Kabel gegossen. Nach Abkühlen der Klebstoffmasse ließ sich die Verklebung aus der Form nehmen. Die Kabel waren nun halb von dem Polyamid eingebettet. Die Verklebungen wurden 10 Tage bei 125 °C an Luft unter Ausschluß von Licht gelagert.

### III Untersuchungen

Die Muster wurden optisch und durch Zugversuche untersucht. Die erhaltenen Eigenschaften sind in der Tabelle I zusammengefaßt. Wenn das Muster nicht schälbar war, wurde es als spröde bezeichnet. Die Winkelschälfestigkeit wurde gemäß DIN 53282 und DIN53539 bestimmt. Bei der Beurteilung des Bruchbildes bedeuten "Adhäsion" eine glatte Trennung von Polyamid und PVC. Bei einem Kohäsionsbruch reißt das Polyamid in sich, d.h. es verbleiben Klebstoffreste auf dem PVC-Material.

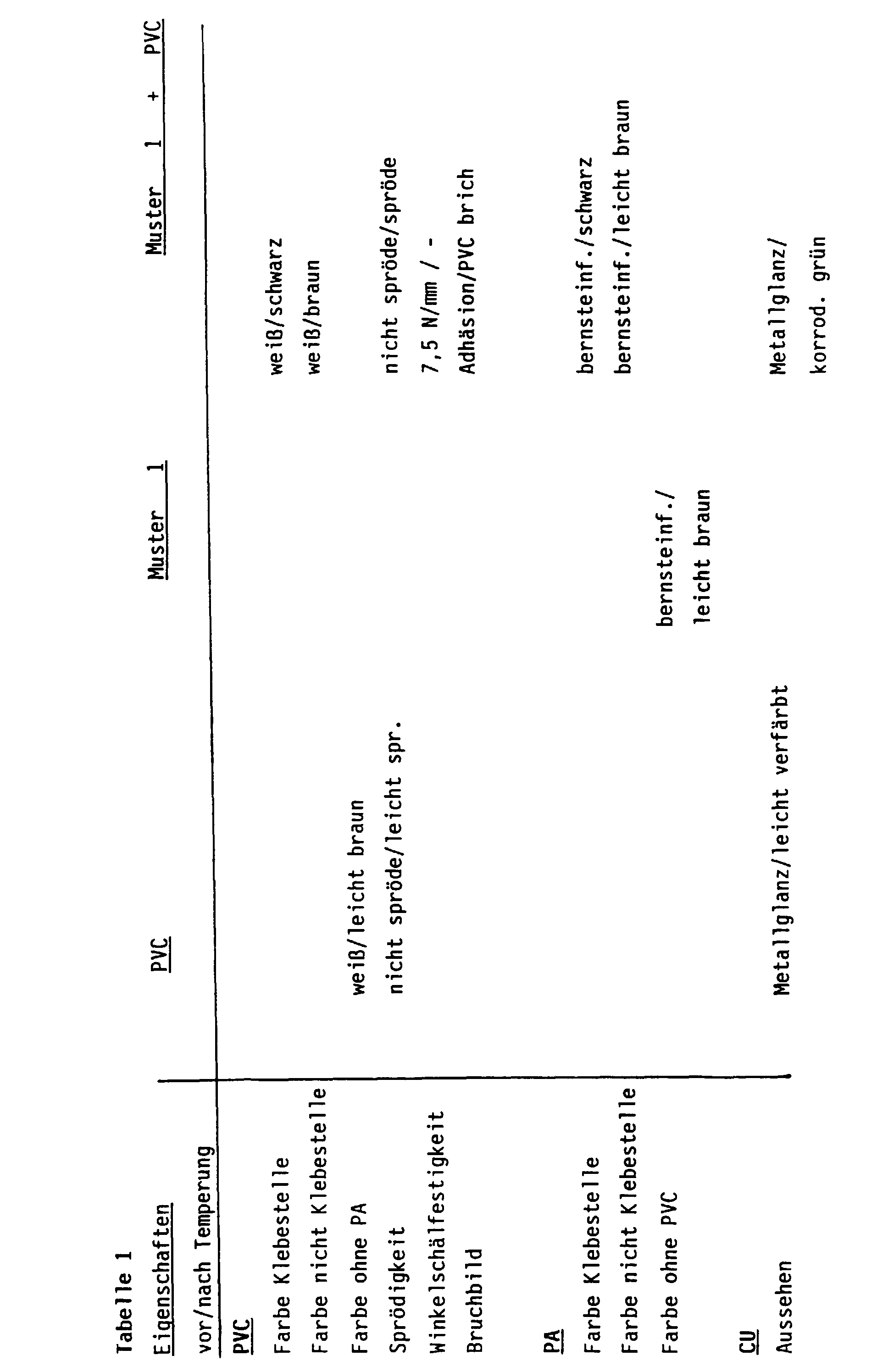

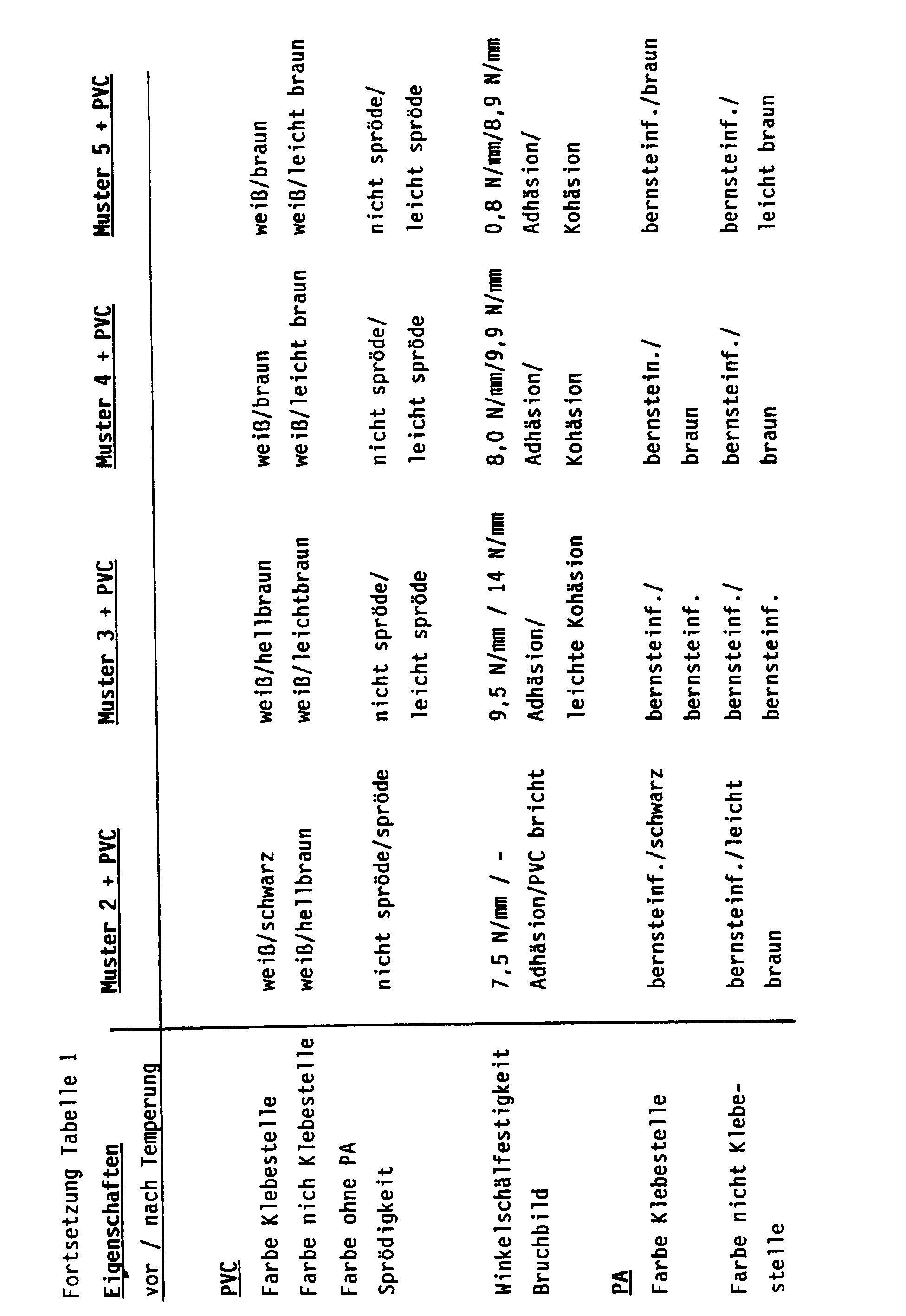

Der Tabelle ist zu entnehmen:
1) Polyamid mit Aminstabilisator (Muster 1):
   Nach Lagerung bei 125°C 240h wird das PVC schwarz und spröde, das Polyamid wird schwarz an der Klebestelle.
2) Polyamid mit Phenolstabilisator (Muster 2):
   Nach Lagerung bei 125°C 240h treten die o.g. Effekte abgeschwächt auf, das PVC bricht aber immer noch bei Beanspruchung.
3) Polyamid mit Phenolstabilisator und PVC-Stabilisierungsmittel (Muster 3, 4, 5).

Nach Lagerung bei 125°C 240h treten die o. g. Effekte stark abgeschwächt auf. Das PVC ist schälbar und bricht nicht bei Beanspruchung.

## Patentansprüche

1. Polyamid auf der Basis von Dimerfettsäure, gekennzeichnet durch einen Gehalt mindestens eines PVC-Wärme-Stabilisators, worunter ein Stoff zu verstehen ist, der in PVC die Abspaltung von HCl bei Temperaturen von 180 bis 200 °C zeitlich oder mengenmäßig verringert, verglichen mit PVC ohne diesen Stoff, wobei die Dehydrochlorierung nach der DIN 53381 zu messen ist.

2. Polyamid nach Anspruch 1, gekennzeichnet durch 0,2 bis 10,0 Gew.-% an PVC-Wärmestabilisator.

3. Polyamid nach Anspruch 1 oder 2, gekennzeichnet durch zinnorganische Verbindungen als PVC-Wärmestabilisator.

4. Polyamid nach Anspruch 1 oder 2, gekennzeichnet durch Epoxidverbindungen als PVC-Wärme-Stabilisator.

5. Polyamid nach mindestens einem der Ansprüche 1 bis 4, gekennzeichnet durch folgende Zusammensetzung:
- 35 bis 49,5 Mol-% dimerisierte Fettsäure sowie
- 0,5 bis 15 Mol-% monomere Fettsäure mit 12 bis 22 C-Atomen und
- 2 bis 35 Mol-% Polyetherdiamine der allgemeinen Formel
H₂N - R₅ - O - (R₆O)ₓ - R₇ - NH₂, (I)
in der
x eine Zahl zwischen 8 und 80,
R₅ und R₇ gleiche oder verschiedene aliphatische und/oder cycloaliphatische Kohlenwasserstoffreste,
R₆ einen gegebenenfalls verzweigten aliphatischen Kohlenwasserstoffrest mit 1 bis 6 Kohlenstoffatomen darstellt,
sowie
- 15 bis 48 Mol-% aliphatische Diamine mit 2 bis 40 Kohlenstoffatomen,
wobei die dimerisierten Fettsäuren bis zu 2/3 durch aliphatische Dicarbonsäuren mit 4 bis 12 Kohlenstoffatomen ersetzt werden können.

6. Polyamid nach mindestens einem der Ansprüche 1 bis 5, gekennzeichnet durch eine Aminzahl von weniger als 2,0.

7. Polyamid nach mindestens einem der Ansprüche 1 bis 6, gekennzeichnet durch einen zusätzlichen Gehalt von 0,5 bis 3,0 an sterisch gehinderten Phenolen.

8. Verwendung des Polyamids nach mindestens einem der Ansprüche 1 bis 7 als Schmelzklebstoff für PVC.

9. Verwendung des Polyamids nach Anspruch 8 als Schmelzklebstoff für PVC zusammen mit Kupfer oder verzinntem Kupfer.

10. Polyamid nach Anspruch 5, dadurch gekennzeichnet, daß R₅ und R₇ gleiche oder verschiedene aliphatische und/oder cycloaliphatische Kohlenwasserstoffreste mit 2 bis 8 C-Atomen sind.

## Claims

1. A polyamide based on dimer fatty acid, characterized by a content of at least one PVC heat stabilizer by which is meant a substance that reduces the elimination of HCI from PVC at temperatures of 180 to 200°C either as a function of time or in terms of quantity by comparison with PVC which has not been heat-stabilized with that substance, dehydrochlorination being measured in accordance with DIN 53381.

2. A polyamide as claimed in claim 1, characterized by 0.2 to 10.0% by weight of PVC heat stabilizer.

3. A polyamide as claimed in claim 1 or 2, characterized by organotin compounds as the PVC heat stabilizer.

4. A polyamide as claimed in claim 1 or 2, characterized by epoxy compounds as the PVC heat stabilizer.

5. A polyamide as claimed in at least one of claims 1 to 4, characterized by the following composition:
- 35 to 49.5 mole-% of dimerized fatty acid and
- 0.5 to 15 mole-% of monomeric C₁₂₋₂₂ fatty acid,
- 2 to 35 mole-% of polyether diamines corresponding to the following general formula:
H₂N - R₅ - O - (R₆O)ₓ - R₇ - NH₂ (I)
in which
x is a number of 8 to 80,
R₅ and R₇ may be the same or different and represent aliphatic and/or cycloaliphatic hydrocarbon radicals,
R₆ is an optionally branched aliphatic hydrocarbon radical containing 1 to 6 carbon atoms,
and
- 15 to 48 mole-% of aliphatic C₂₋₄₀ diamines,
up to two thirds of the dimerized fatty acids being replaceable by aliphatic C₄₋₁₂ dicarboxylic acids.

6. A polyamide as claimed in at least one of claims 1 to 5, characterized by an amine value of less than 2.0.

7. A polyamide as claimed in at least one of claims 1 to 6, characterized by an additional content of 0.5 to 3.0% by weight of sterically hindered phenols.

8. The use of the polyamide claimed in at least one of claims 1 to 7 as a hotmelt adhesive for PVC.

9. The use of the polyamide claimed in claim 8 as a hotmelt adhesive for PVC in conjunction with copper or tin-plated copper.

10. A polyamide as claimed in claim 5, characterized in that R₅ and R₇ may be the same or different and represent aliphatic and/or cycloaliphatic hydrocarbon radicals containing 2 to 8 carbon atoms.

## Revendications

1. Polyamide à base d'acide gras dimère,
caractérisé en ce qu'
il contient au moins un stabilisant thermique de PVC, corps parmi lesquels il faut comprendre un corps qui diminue dans le PVC la séparation d'HCl à des températures de 180 à 200°C dans le temps ou en quantité, par comparaison avec le PVC sans ce corps, la déchlorhydratation étant à mesurer selon DIN 53381.

2. Polyamide selon la revendication 1,
caractérisé par
de 0,2 à 10,0 % en poids de stabilisant thermique de PVC.

3. Polyamide selon la revendication 1 ou 2,
caractérisé par
des composés d'organo-étain comme stabilisants thermiques de PVC.

4. Polyamide selon la revendication 1 ou 2,
caractérisé par
des composés époxyde comme stabilisants thermiques de PVC.

5. Polyamide selon au moins l'une des revendication 1 à 4,
caractérisé par la composition suivante :
• 35 à 49,5 % molaire d'acide gras dimérisé ainsi que
• 0,5 à 15 % molaire d'acide gras monomère comportant de 12 à 22 atomes de carbone et
• 2 à 35 % molaire de polyétherdiamines de formule générale
H₂N - R₅ - O -(R₆O)ₓ - R₇ - NH₂, (I)
dans laquelle :
x représente un nombre compris entre 8 et 80,
R₅ et R₇ représentent des radicaux hydrocarbonés aliphatiques et/ou cycloaliphatiques identiques ou différents,
R₆ représente un radical hydrocarboné aliphatique éventuellement ramifié comportant de 1 à 6 atomes de carbone, ainsi que
• 15 à 48 % molaire de diamines aliphatique comportant de 2 à 40 atomes de carbone,
où les acides gras dimérisés peuvent être remplacés jusqu'aux deux tiers par des acides dicarboxyliques aliphatiques comportant de 4 à 12 atomes de carbone.

6. Polyamide selon l'une au moins l'une des revendications 1 à 5,
caractérisé par
un indice d'amine inférieur à 2,0.

7. Polyamide selon au moins l'une des revendications 1 a 6,
caractérisé par
une teneur supplémentaire de 0,5 à 3,0 en phénols stériquement empêchés.

8. Utilisation du polyamide selon au moins l'une des revendications 1 à 7 comme colle à fusion pour PVC.

9. Utilisation du polyamide selon la revendication 6 comme colle à fusion pour PVC avec du cuivre ou du cuivre étamé.

10. Utilisacion du polyamide selon la revendication 5,
caractérisée en ce que
R₅ et R₇ sont des radicaux hydrocarbonés aliphatiques et/ou cyclo-aliphatiques identiques ou différents comportant de 2 à 8 atomes de carbone.
